# EUROPÄISCHE PATENTSCHRIFT

(11) **EP 0 484 280 B1**
(45) Veröffentlichungstag und Bekanntmachung des Hinweises auf die Patenterteilung: **28.12.1994**
(21) Anmeldenummer: 91810825.9
(22) Anmeldetag: 25.10.1991
(51) Int. Cl.: F23G 7/06, F23G 5/46, F22B 7/12, F22B 3/04, F01K 3/00, F23N 1/00

(54) **Anlage zur Reinigung von schadstoffbelasteter Luft**
A plant for the purification of pollutant containing air
Installation pour la purification de l'air chargé de polluants

(30) Priorität: 31.10.1990 CH 3454/90
(43) Veröffentlichungstag der Anmeldung: 06.05.1992
(73) Patentinhaber: KOENIG AG, CH-8587 Oberaach (CH)
(72) Erfinder: Natter, Arthur, A-6922 Wolfurt (AT)
(74) Vertreter: Münch, Otto

(56) Entgegenhaltungen:
- EP-A- 0 101 372
- EP-A- 0 175 297
- EP-A- 0 212 245
- EP-A- 0 319 468
- DE-A- 3 025 948
- GB-A- 231 142
- GB-A- 2 053 432
- US-A- 4 038 032

## Beschreibung

Eine Anlage zur Reinigung von schadstoffbelasteter Abluft ist aus dem U.S. Patent Nr. 4,890,581 bekannt. Bei dieser Anlage wird die Abluft eines Spannrahmens als Verbrennungsluft dem Brenner eines Dampfkessels zugeführt. Der Brenner wird mit variablem, lastabhängigem Luftüberschuss betrieben. In Abkehr von dem sonst angestrebten, möglichst geringen Luftüberschuss wird der Luftüberschuss bei sinkender Kessellast erhöht. Dadurch kann trotz variabler Kessellast in vielen Fällen die gesamte Abluftmenge des Spannrahmens gereinigt werden. Durch dieses Verfahren wird ausserdem der Energieaufwand reduziert und der Wirkungsgrad verbessert. Diese Anlage hat sich deshalb sehr bewährt. Grundsätzlich ist sie auch zur Reinigung von Abluft aus andern Quellen als von Spannrahmen oder Sengen geeignet.

Im praktischen Betrieb von nach dem US-Patent Nr. 4,890,581 gebauten Anlagen hat sich allerdings gezeigt, dass die an sich angestrebte obere Grenze des Luftüberschusses von λ = 3,5 nicht erreicht werden kann, weil die Reinigungswirkung bei sehr hohem Luftüberschuss ungenügend ist. Im praktischen Betrieb musste deshalb die Obergrenze des Luftüberschusses auf etwa λ = 2,5 beschränkt werden. Dies reicht in gewissen Anwendungsfällen, wo die Kessellast stark schwankt oder wo der Kessel nur schwach ausgelastet ist, nicht aus.

In solchen Fällen musste deshalb auf die bekannte thermische Nachverbrennung nach den VDI-Richtlinien 2442 vom Juni 1987 zurückgegriffen werden. Bei dieser Nachverbrennungsanlage (TNV) wird Rohgas mittels eines Flächenbrenners auf etwa 800° C erhitzt und anschliessend mit einem Wärmetauscher wieder abgekühlt. Die Brennstoffzufuhr wird so geregelt, dass in der Brennkammer die Temperatur bei 800° C konstantgehalten wird. Die Brennkammer ist ein unisoliertes Stahlrohr, das aussen vom Rohgas umströmt wird. Das Rohr wirkt so als letzte Stufe des Wärmetauschers. Im Wärmetauscher wird dabei das zu reinigende Rohgas bis gegen 600° C erhitzt, damit der Brennstoffaufwand möglichst gering gehalten werden kann. Solche Anlagen sind teuer und bringen ausser der Reduktion der Umweltbelastung kaum einen Nutzeffekt. Die im Gas noch enthaltene Abwärme ist selten sinnvoll wirtschaftlich nutzbar. Der auf hoher Temperatur betriebene Gas-Gas-Wärmetauscher stellt ausserdem erhebliche Materialprobleme, so dass häufig eine an sich erwünschte Temperatur über 800° C nicht gefahren werden darf.

Ein Flächenbrenner für solche TNV-Anlagen ist in der DE-A-3 025 948 beschrieben. Diese Brenner werden im Betrieb vom bis gegen 600° C heissen Rohgas umspült und sind für eine konstante Brenntemperatur von etwa 800° C ausgelegt. Sie eignen sich nicht für herkömmliche Dampfkessel, welche mit Flammentemperaturen bis gegen 1800° C betrieben werden.

Aus der EP-A-212 245 ist eine Anlage zur Verbrennung von halogenisierten Kohlewasserstoffen bekannt. Dem Flammrohr eines Dampfkessels ist eine innenisolierte Brennkammer vorgeschaltet, in welche ein Spezialbrenner mündet. Dem Brenner werden Verbrennungsluft, Brennstoff, die zu verbrennenden Schadstoffe sowie ein Zerstäubungsfluid zugeführt. Der Brenner wird bei einer konstanten Flammentemperatur von etwa 1800° C betrieben.

Der vorliegenden Erfindung liegt die Aufgabe zugrunde, eine Anlage zur Reinigung schadstoffbelasteter Abluft derart auszubilden, dass sie über einen breiten Dampf-Lastbereich sämtliche anfallende Abluft zu reinigen vermag.

Die erfindungsgemässe Anlage zur Reinigung der Abluft einer Abluftquelle umfasst:
a) einen Dampfkessel mit einem Flammrohr und Konvektionsheizflächen, die von Wasser umgeben sind;
b) eine innen thermisch isolierte, an das Flammrohr angeschlossene Brennkammer, deren Innenisolation sich über mindestens einen Teil des Flammrohres erstreckt;
c) einen in die Brennkammer mündenden Konus- oder Flächenbrenner zum Betrieb mit hohem Luftüberschuss;
d) ein mit dem Brenner verbundenes, durch eine Regeleinrichtung gesteuertes Brennstoff-Regelventil;
e) ein Verbrennungsluftgebläse, das druckseitig mit der Brennkammer und saugseitig über eine Leitung mit der Abluftquelle verbunden ist;
f) einen an die Konvektionsheizflächen des Dampfkessels angeschlossenen Rauchgaskanal; und
g) einen im Rauchgaskanal eingebauten Gas-Wasser-Wärmetauscher, der mit dem Dampfkessel wasserseitig verbunden ist.

Bei der erfindungsgemässen Lösung wird im Gegensatz zu TNV-Anlagen die Brennstoffzufuhr zum Brenner nicht abhängig von der Brennkammertemperatur, sondern abhängig von der Dampflast geregelt. Im Gegensatz zu den bekannten TNV-Anlagen und Dampfkesseln ist die Brennkammer innen thermisch isoliert. Gegenüber einem konventionellen Dampfkessel hat dann der Kessel der erfindungsgemässen Anlage wegen des hohen Luftüberschusses für die gleiche Leistung einen erheblich grösseren Rauchgasdurchsatz. Er ist deshalb für seine Leistung nach herkömmlichen Kriterien überdimensioniert. Wirtschaftlich ist er dann, wenn diese erhöhte Rauchgasmenge von einer Temperatur von etwa 250° C beim Austritt aus dem Kessel mindestens auf die Temperatur der zugeführten Abluft, wenn möglich unter den Taupunkt, unter Rückgewinnung dieser Abwärme gekühlt wird.

Anhand einer Pilotanlage konnten anfängliche Befürchtungen zerstreut werden, ein im Handel erhältlicher Konusbrenner werde bei den im Betrieb des Kessels wegen der schwankenden Kessellast erforderlichen variablen Brennkammertemperaturen von bis gegen 1300° C versagen. Solche Brenner werden üblicherweise nur für eine Brenntemperatur unter ca. 900° C empfohlen. Dass der im Handel erhältliche Brenner trotz der zeitweise erheblich höheren Temperatur einwandfrei arbeitet, wird darauf zurückgeführt, dass er bei der erfindungsgemässen Anwendung von Abluft von etwa 130° C umspült wird, welche erheblich kühler ist als das Rohgas von bis gegen 600° C, zu dessen Reinigung solche Brenner bisher eingesetzt wurden.

Vorzugsweise hat der Dampfkessel einen Fühler für eine Zustandsgrösse des im Dampfkessel enthaltenen Dampfes und die Regeleinrichtung einen Regler, der eingangsseitig mit dem Fühler und ausgangsseitig mit dem Brennstoffregelventil verbunden ist, so dass die Brennstoffmenge abhängig von der Dampflast des Dampfkessels und zumindest in einem Teil-Lastbereich unabhängig von der zugeführten Abluftmenge geregelt ist.

Vorzugsweise hat die Kennlinie des Reglers für das Brennstoff-Regelventil einen Proportionalbereich, in welchem der Schliesshub des Regelventils proportional dem Dampfdruck im Kessel ist, und einen daran anschliessenden zweiten Bereich mit minimaler Ventilöffnung, die unabhängig vom Dampfdruck bleibt, wobei der zweite Bereich bezogen auf den Dampfdruck erheblich breiter ist als der Proportionalbereich. Dadurch gelingt es, Zeiten geringer Dampfentnahme ohne Kesselabschaltung und damit verbundener Emission ungereinigter Abluft zu überbrücken. Die in diesen Zeiten anfallende Energie wird in einer Temperaturerhöhung des Kesselwassers gespeichert und steht anschliessend zur Deckung eines Spitzenbedarfs zur Verfügung.

Nachfolgend werden Ausführungsbeispiele der Erfindung anhand der Zeichnung erläutert. Darin zeigt:
- Fig. 1: ein Schema einer ersten Ausführungsform,
- Fig. 2: eine Teildarstellung einer Variante der Ausführungsform nach Fig. 1,
- Fig. 3: ein Schema einer Regeleinrichtung,
- Fig. 4: ein Schema mit den Kennlinien der Regler,
- Fig. 5 und Fig. 7: Teildarstellungen von Varianten der Ausführungsform nach Fig. 1, und
- Fig. 6: ein Schema einer vereinfachten Regelung.

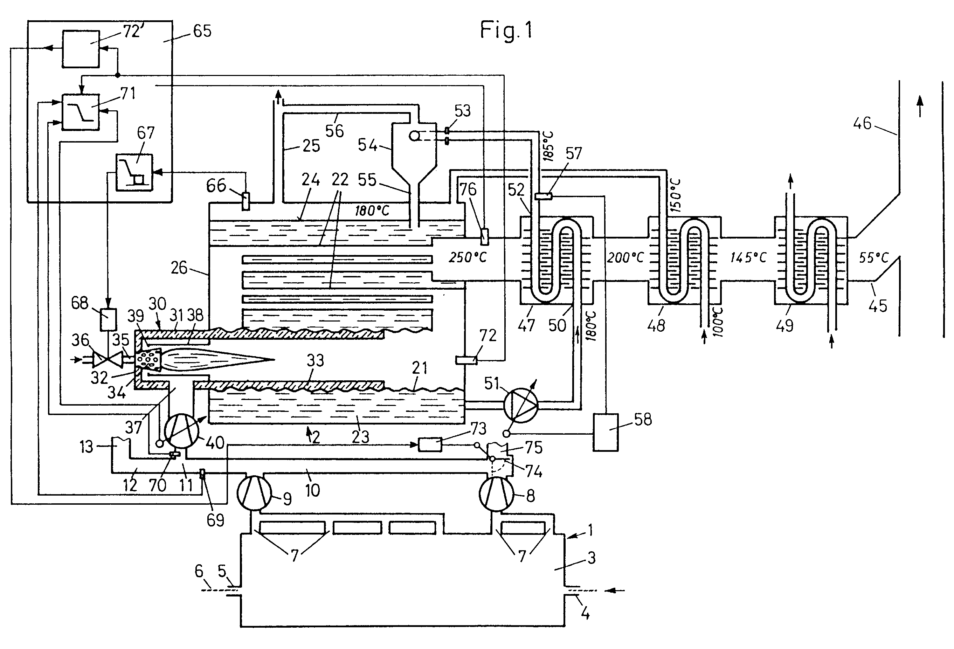

Die Anlage nach Fig. 1 umfasst einen Spannrahmen 1 und einen Drei-Zug-Dampfkessel 2. Der Spannrahmen 1 hat ein allseits geschlossenes Gehäuse 3 mit einem Eintrittsschlitz 4 und einem Austrittsschlitz 5 für eine Stoffbahn 6. Die heisse und mit organischen Schadstoffen belastete Abluft im Innern des Gehäuses 3 wird über sechs Absaugstutzen 7 von zwei Gebläsen 8, 9 abgesaugt und über eine thermisch isolierte, gemeinsame Verbindungsleitung 10 dem Kessel 2 zugeführt. An einer Zweigstelle 11 zweigt von der Leitung 10 eine Leitung 12 zu einem Ausgleichskamin 13 ab. Der Kessel 2 hat ein Flammrohr 21 und Konvektionsheizflächen 22 in Form von Rohrbündeln, die den zweiten und dritten Zug bilden. Das Flammrohr 21 und die Konvektionsheizflächen 22 sind im Betrieb von siedendem Wasser 23 umgeben. Oberhalb der Wasseroberfläche 24 ist ein Dampfanschluss 25 vorhanden.

Bei konventionellen Kesseln dieser Art ist der Brenner am stromaufwärtigen Ende des Flammrohres 21 an der einen Stirnwand 26 des Kessels 2 montiert. Bei der Anlage nach Fig. 1 ist hingegen an der Stirnwand 26 eine Brennkammer 30 montiert, die ins Flammrohr 21 mündet. Die Brennkammer 30 besteht aus einem zylindrischen Stahlmantel 31 mit einem stirnseitigen Deckel 32. Der Mantel 31, der Deckel 32 und mindestens der überwiegende Teil des Flammrohres 21 sind innen mit Leichtschamottesteinen 33 oder einem andern refraktären Material ausgekleidet. Am Deckel 22 ist ein Konus- oder Flächenbrenner 34 montiert. Solche Brenner haben im Gegensatz zu den herkömmlichen Dampfkesselbrennern eine Vielzahl kleiner Flammen und eignen sich für den Betrieb mit hohem Luftüberschuss. Solche Brenner werden z.B. bei TNV-Anlagen verwendet. Ein Beispiel eines derartigen Brenners ist der von ECLIPSE COMBUSTION, Rockford, Illinois, USA angebotene Eclipse Incini-Cone Burner. Die Brennstoffdüsen des Brenners 34 sind über eine Leitung 35 mit einem Brennstoffventil 36 verbunden. Die Verbrennungsluftzufuhr zum Brenner 34 erfolgt über eine radiale Eintrittsöffnung 37, ein koaxiales zylindrisches Rohr 38 und eine Profilplatte 39. Die Leitung 10 ist über ein regelbares Gebläse 40 mit der Eintrittsöffnung 37 verbunden.

Ein Rauchgaskanal 45 verbindet das stromabwärtige Ende der Konvektionsheizflächen 22 mit einem Kamin 46. Im Kanal 45 sind drei Rippenrohr-Wärmetauscher 47, 48, 49 eingebaut. Der wasserseitige Eintrittsanschluss 50 des stormaufwärigsten Wärmetauschers 47 ist über eine regelbare Pumpe 51 an den Wasserraum des Kessels 2 angeschlossen. Der Austrittsanschluss 52 ist über eine als Druckmindereinrichtung wirkende Blende 53 einer Trenneinrichtung zugeführt. Die Trenneinrichtung ist als Wirbelkammer 54 ausgebildet, in deren zylindrische Wand die Leitung vom Wärmetauscher 47 tangential mündet. Die Kammer 54 ist über je eine separate Leitung 55, 56 an den Wasser-Dampf-Kreislauf des Kessels 2 angeschlossen.

Im Wärmetauscher 47 wird das durchfliessende Wasser über die Siedetemperatur bei Kesseldruck erhitzt. Um ein Sieden des Wassers innerhalb der Rohre des Wärmetauschers 47 zu verhindern, ist beim Austrittsanschluss 52 ein Temperaturfühler 57 angebracht. Das Signal dieses Fühlers 57 steuert einen Regler 58 für die Pumpe 51 derart, dass der Druck des Wassers zwischen der Pumpe 51 und der Blende 53 über dem Dampfdruck bei der vom Fühler 57 gemessenen Temperatur ist. Nach der Blende 53 verdampft ein Teil des Wassers. Durch die getrennte Einleitung von Wasser und Dampf nach der Wirbelkammer 54 wird erreicht, dass die natürliche Wasserkonvektion im Kessel 2 kaum gestört wird. Zusätzlich oder anstelle der Regelung der Pumpe 51 kann auch die Druckmindereinrichtung 53 regelbar sein. Durch diesen mit überhöhtem Druck betriebenen Wärmetauscher 47 gelingt es, einen Teil der Rauchgasabwärme unmittelbar in Form von Dampf rückzugewinnen und so die Rauchgastemperatur von etwa 250° C auf etwa 200° C zu senken.

Der zweite Wärmetauscher 48 dient der Speisewasservorwärmung. Die Wasser-Durchflussmenge durch diesen Wärmetauscher 48 beträgt nur etwa 1/10 jener durch den Wärmetauscher 47, dafür ist die Temperaturerhöhung etwa zehnmal höher, so dass nach dem Wärmetauscher 48 das Rauchgas eine Temperatur von z.B. 145° C hat. Der dritte Wärmetauscher 49 dient der Erwärmung von Brauchwasser und/oder Frisch-Speisewasser.

Eine Regeleinrichtung 65 dient zur Regelung der Anlage. Ein Druckfühler 66 misst den Dampfdruck im Kessel 2 und steuert über einen Proportionalregler 67 einen Stellmotor 68 des Brennstoffventils 36 derart, dass bei sinkendem Kesseldruck das Brennstoffventil 36 öffnet. Die Verbrennungsluftzufuhr zum Brenner 30 erfolgt hingegen zumindest in einem mittleren Lastbereich des Kessels 2 unabhängig von der Kessellast. Vielmehr wird das Gebläse 40 so geregelt, dass über den Ausgleichskamin 13 ständig eine geringe Menge Frischluft angesaugt wird. Dadurch wird verhindert, dass über den Kamin 13 schadstoffbelastete Abluft austritt. Dazu ist stromauf- und stromabwärts der Zweigstelle 11 je ein Temperaturfühler 69, 70 in der Leitung 10 eingebaut. Die beiden Fühler 69, 70 sind mit einem weiteren Proportionalregler 71 verbunden. Dieser ist so eingestellt, dass er eine Temperaturdifferenz von etwa 5° C über die Zweigstelle 11 aufrecht erhält. Sinkt die Temperaturdifferenz, so erhöht der Regler 71 die Drehzahl des Gebläses 40. Der Regler 71 hat eine variable untere und obere Begrenzung. Beide Begrenzungen werden durch einen Temperaturfühler 72 am Ende des Flammrohres 21 gesteuert. An dieser Stelle sollte die Temperatur etwa 1250° C nicht übersteigen, was die erforderliche Verbrennungsluftzufuhr nach unten begrenzt. Andererseits sollte die Temperatur nicht unter z.B. 650° C fallen, um sicherzustellen, dass sämtliche Schadstoffe der Abluft verbrannt sind. Dies begrenzt die Gebläseleistung nach oben. Falls die Kessellast hoch ist und das Ventil 36 weit geöffnet ist, kann deshalb über den Kamin 13 zusätzlich Frischluft angesaugt werden. Bei sehr geringer Kessellast kann demgegenüber etwas Abluft aus dem Kamin 13 austreten.

Falls dies unerwünscht ist, können z.B. mittels eines Temperaturschalters 72′, eines Stellmotors 73 und einer Klappe 74 die ersten beiden, mittels des Gebläses 8 abgesaugten Felder des Spannrahmens 1 von der Leitung 10 abgetrennt und somit die Luftzufuhr zum Gebläse 40 reduzieit werden. Die Abluft aus den ersten beiden Feldern ist nämlich bedeutend weniger mit Schadstoffen belastet als jene aus den übrigen Feldern und kann daher eher über einen Kamin 75 ins Freie geleitet werden.

Es ist aber je nach Anwendungsfall auch möglich, dass der Gesamtschadstoffausstoss ohne die beiden zuvor erwähnten Massnahmen geringer ist als mit der einen oder anderen dieser Massnahmen. In diesem Fall wird die obere Begrenzung beim Regler 71 sowie der Schalter 72′, die Klappe 74 und der Kamin 75 weggelassen.

Durch die thermisch isolierende Auskleidung 33 der Kammer 30 und des Flammrohres 21 wird erreicht, dass keine kalten Zonen innerhalb des Flammrohres 21 auftreten, und dass somit die Temperatur der Abgase über den ganzen Flammrohrquerschnitt annähernd gleich ist. Dadurch kann der Luftüberschuss gegenüber der eingangs erwähnten Anlage bedeutend gesteigert werden. Der Flächenbrenner 34 ermöglicht eine sichere Verbrennung bei diesem hohen Luftüberschuss auch bei sauerstoffarmer Abluft bis 13 % O₂, z.B. wenn die Abluft viel Wasserdampf oder andere Inertgase enthält. Solche Abluft eignet sich bei herkömmlichen Dampfkesselbrennern nicht als Verbrennungsluft.

Wie weit das Flammrohr 21 isoliert wird, richtet sich hauptsächlich nach dem im Betrieb zu erwartenden Lastbereich des Kessels 2 im Verhältnis zu seiner Nennlast. Wenn der Kessel 2 nur schwach ausgelastet ist, wird man das ganze Flammrohr 21 auskleiden, damit mit höherem Luftüberschuss gefahren werden kann. Bei durchschnittlich höherer Auslastung hingegen wird man mehr oder weniger vom stromabwärtigen Ende des Flammrohres 21 unverkleidet lassen, damit höhere Brennkammertemperaturen gefahren werden können. In diesem unverkleideten Abschnitt des Flammrohres 21 wird das Rauchgas durch Abstrahlung an die gekühlte Flammrohrwand abgekühlt.

In den nachfolgenden Figuren sind gleiche Teile mit gleichen Bezugszeichen versehen, so dass sich eine detaillierte Beschreibung dieser Teile erübrigt.

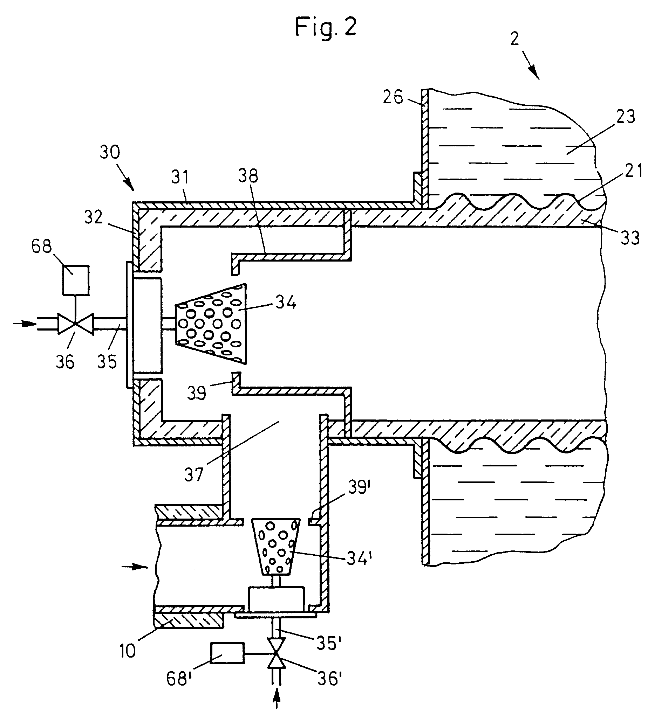

In Fig. 2 ist ein Teil einer Variante der Ausführungsform nach Fig. 1 dargestellt. Die Variante nach Fig. 2 unterscheidet sich von der Ausführungsform nach Fig. 1 dadurch, dass die Verbrennung zweistufig erfolgt. Dem Brenner 34 ist ein gleichartiger Flächenbrenner 34′ vorgeschaltet. Dadurch wird eine bessere Vermischung der Abluft mit den Verbrennungsprodukten des Brenners 34 und damit eine besser konstante Temperatur über den Querschnitt des Flammrohres 21 erreicht.

Bei den Ausführungsformen nach Fig. 1 und 2 eignet sich grundsätzlich statt des Drei-Zug-Dampfkessels 2 auch ein Abhitze-Dampfkessel, der kein Flammrohr 21 enthält. In diesem Fall wird die innen thermisch isolierte Brennkammer 30 entsprechend verlängert. Im Gegensatz zu herkömmlichen Abhitze-Dampfkesseln, deren Last nicht regelbar ist, und die deshalb nur in Verbindung mit einem zusätzlichen, konventionellen Dampfkessel eingesetzt werden können, erlaubt die erfindungsgemässe Lastregelung, einen variablen Dampfbedarf zu decken und somit diesen zusätzlichen Dampfkessel wegzulassen.

Die beiden Begrenzungen des Reglers 71 können statt mittels des Temperaturfühlers 72 auch mittels eines Abgasfühlers 76 im Rauchgaskanal 45 geregelt werden. Der Abgasfühler 76 kann beispielsweise den O₂-Gehalt oder den CO-Gehalt der Abgase messen und über die Begrenzung im Regler 71 sicherstellen, dass ein minimaler O₂-Gehalt nicht unter- bzw. ein Grenzwert des CO-Gehaltes nicht überschritten wird.

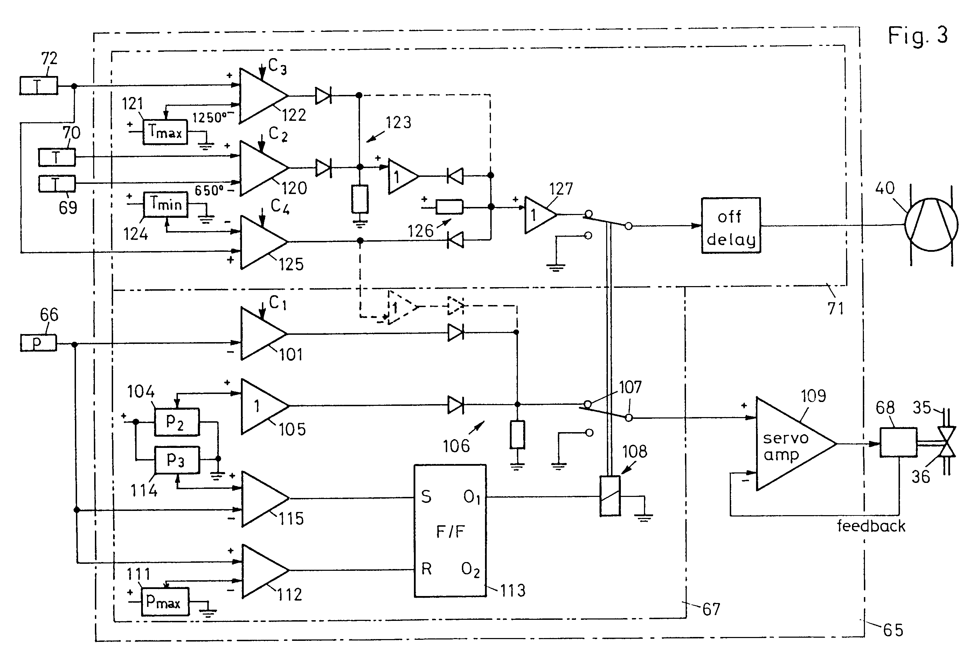

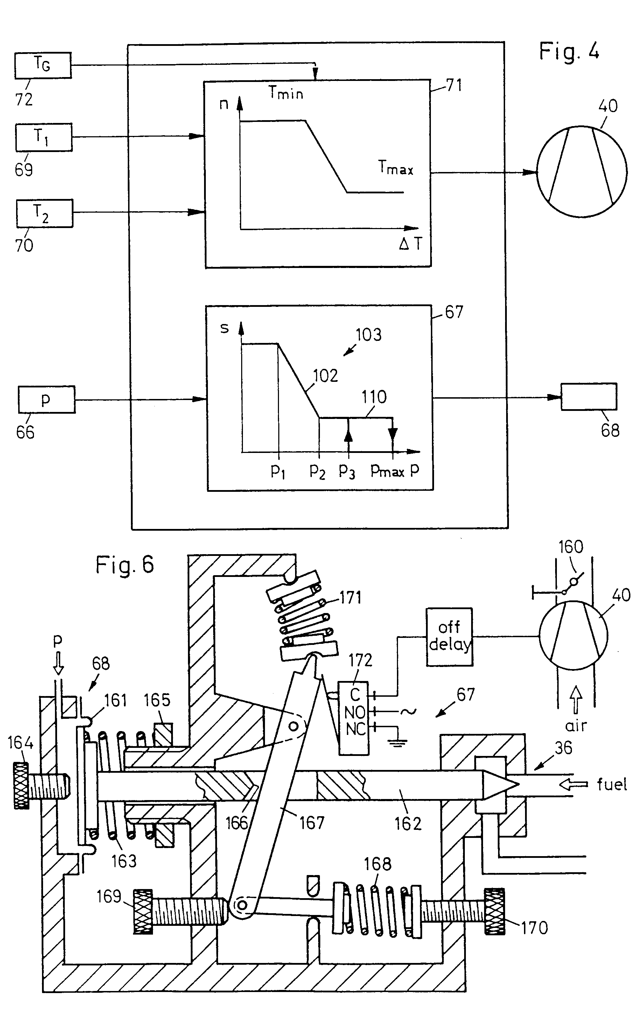

In Fig. 3 ist ein Beispiel eines Schaltschemas der Regeleinrichtung 65 dargestellt, wobei hier der Temperaturschalter 72′ weggelassen ist. Im dargestellten Beispiel ist die Regelung mittels elektronischer Analog-Bauelemente gezeigt. Dieselben Funktionen, deren Kennlinien in Fig. 4 gezeigt sind, können jedoch auch mit einem Digital-Regler oder mit mechanisch-pneumatischen Komponenten verwirklicht werden.

Das Signal des Dampfdruckfühlers 66 ist im Brennstoffregler 67 an den Minus-Eingang eines Verstärkers 101 angeschlossen, dessen einstellbare Verstärkung C₁ die Neigung des Proportionalastes 102 der Kennlinie 103 des Reglers 67 (Fig. 4) bestimmt. Ueber ein Potentiometer 104 wird die zur Aufrechterhaltung der Flamme im Brenner 34 minimal erforderliche Oeffnung des Brennstoffventils 36 eingestellt. Der am Potentiometer 104 abgegriffene Wert wird in einem Verstärker 105 verstärkt. Der Ausgang einer Diodenschaltung 106 ist der höhere der Ausgänge der beiden Verstärker 101, 105. Die Diodenschaltung 106 ist über Schaltkontakte 107 eines Relais 108 an einen Servoverstärker 109 angeschlossen, welcher den Stellmotor 68 regelt. Im Normalbetrieb wird also das Brennstoffventil 36 mit zunehmendem Kesseldruck p von der voll geöffneten Stellung beim Druck p₁ proportional geschlossen bis zum Druck p₂ und verbleibt dann mit dieser Minimalöffnung (auf der Kennlinie 103 Ast 110), bis der Maximaldruck pₘₐₓ erreicht ist. Bei diesem an einem Potentiometer 111 einstellbaren Druck pₘₐₓ betätigt das Signal des Fühlers 66 über einen Differenzverstärker 112 den Reset-Eingang R eines Flip-Flops 113. Dessen einer Ausgang 0₁ fällt ab, so dass das Relais 108 in die Grundstellung schaltet und den Plus-Eingang des Servoverstärkers 109 erdet. Damit schliesst das Ventil 36 vollständig. Etwas verzögert wird auch das Gebläse 40 ausgeschaltet. Der Kessel 2 ist nun abgeschaltet und allenfalls noch anfallende Abluft entweicht über den Kamin 13.

Sobald der Kesseldruck p unter einen an einem Potentiometer 114 einstellbaren Wert p₃ sinkt, wird über einen weiteren Differenzverstärker 115 der Set-Eingang S des Flip-Flops 113 betätigt und der Kessel 2 wieder in Betrieb gesetzt, wobei natürlich auch die übrigen zum Einschalten des Brenners erforderlichen Funktionen, z.B. Zündung, initiiert werden.

Bei gewöhnlichen Kesselsteuerungen erfolgt das Abschalten unmittelbar beim Erreichen der Minimallast, also beim Druck p₂. Bei der erfindungsgemässen Anlage wird demgegenüber die Differenz pₘₐₓ - p₂ so gross als möglich und wesentlich grösser als p₂ - p₁ gewählt. Dies hat den erheblichen Vorteil, dass während Zeiten geringen Dampfbedarfs der Kessel 2 nicht abschaltet, sondern die während dieser Zeit anfallende Verbrennungsenergie durch eine Erhöhung der Wassertemperatur im Kessel 2 speichert.

Hat der Kessel 2 z.B. einen zulässigen Ueberdruck von 13 bar, was einer Wassertemperatur von 198° C entspricht, und wählt man den normalen Betriebsbereich, also den Proportionalbereich 102 von p₁ = 6 bar (entsprechend 166° C) bis p₂ = 7 bar (entsprechend 172° C), so lassen sich auf diese Weise über die Temperaturdifferenz von 26° C bei einem Wasserinhalt des Kessels 2 von 10 m³ etwa 260′000 kcal Energie speichern, was einer Dampfentnahme von etwa 540 kg entspricht. Durch diese Energiespeicherung kann die erfindungsgemässe Anlage auch in jenen Fällen eingesetzt werden, in welchen im Betrieb des Dampfkessels Zeitspannen ohne oder mit nur geringer Dampfentnahme auftreten.

Die beschriebene Energiespeicherung hat ausserdem den Vorteil, dass der Kessel nach einer solchen Periode geringer Dampfentnahme, auf welche häufig eine Verbrauchsspitze folgt, diese Spitze unmittelbar mit der gespeicherten Energie decken kann, indem beim Absenken des Druckes auf den Normalbereich p₁ bis p₂ sofort die entsprechende Dampfmenge frei wird.

In Fig. 3 ist weiter der Regler 71 für die Regelung der Drehzahl n des Gebläses 40 veranschaulicht. Im Normalbetrieb wird das Gebläse 40 durch die Differenz der Signale der Temperaturfühler 69, 70 mittels eines Verstärkers 120 mit einstellbarer Verstärkung C₂ geregelt. Steigt die mit dem Fühler 72 gemessene Temperatur über einen mittels eines Potentiometers 121 eingestellten Wert von z.B. 1250°, so übernimmt ein Verstärker 122 über eine Diodenschaltung 123 die Gebläseregelung und sorgt für zusätzliche Frischluftzufuhr durch den Ausgleichskamin 13. Sinkt hingegen die Temperatur des Fühlers 72 unter einen an einem Potentiometer 124 eingestellten Wert von z.B. 650° C, der gerade noch eine hinreichende Verbrennung der Schadstoffe ermöglicht, so übernimmt der Verstärker 125 über eine weitere Diodenschaltung 126 die Gebläseregelung. In diesem Fall kann zusätzlich mittels des Temperaturschalters 72′ die Klappe 74 umgeschaltet werden.

Falls keine Schadstoffe emittiert werden sollen, wird die Diodenschaltung 126 weggelassen und der Ausgang der Diodenschaltung 123 direkt mit dem Eingang des Verstärkers 127 verbunden. Dafür wird der Ausgang des Verstärkers 125 über einen Inverter auf die Diodenschaltung 106 aufgeschaltet. Diese Variante ist in Fig. 3 mit gestrichelten Linien dargestellt. Bei dieser Variante wird dem Brenner 34 alle anfallende Abluft zugeführt und im Bereich 110 der Kennlinie 103 die Temperatur von 650° C in der Wendekammer durch Regelung des Brennstoffventils 36 aufrecht erhalten. In diesem Fall ist die Heizleistung während der Energiespeicherung zwischen p₂ und pₘₐₓ im allgemeinen höher, so dass nur kürzere Zeitspannen ohne Dampfentnahme überbrückt werden können.

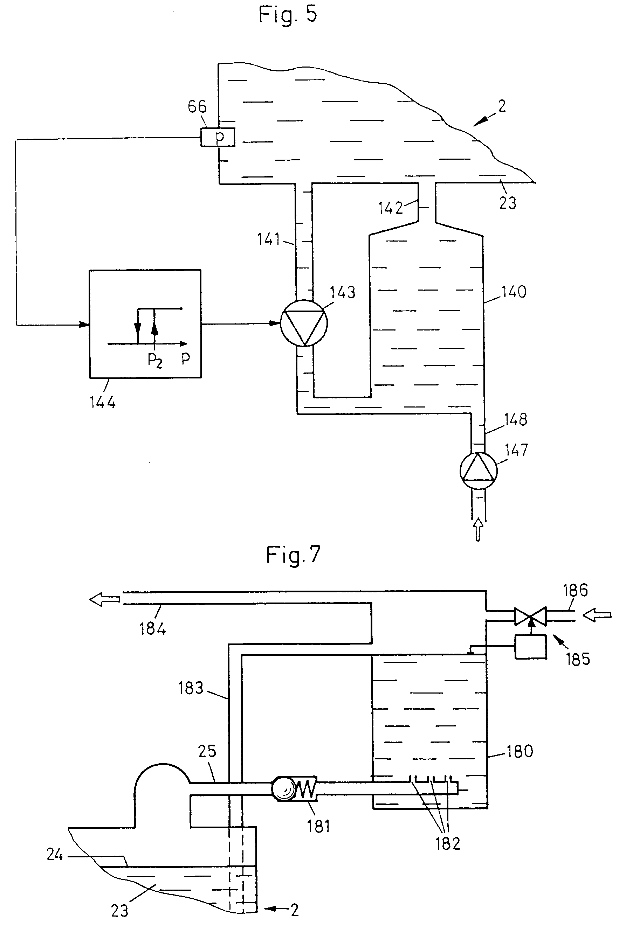

In Fig. 5 ist eine Variante zur Erhöhung der Energiespeicher-Kapazität des Kessels 2 dargestellt. An den Wasserraum des Kessels 2 ist ein zusätzlicher Wasserbehälter 140 mittels zweier Leitungen 141, 142 angeschlossen. In der Leitung 141 ist eine Umwälzpumpe 143 montiert. Die Pumpe schaltet mittels eines Druckschalters 144 ein, wenn der Kesseldruck p über den Wert p₂ steigt. Das Kessel-Speisewasser wird nicht dem Kessel 2 direkt, sondern dem Behälter 140 zugeführt, was in Fig. 5 durch die Speisewasserpumpe 147 und die Speiseleitung 148 angedeutet ist. Damit wird erreicht, dass in der Energiespeicherphase zwischen p₂ und pₘₐₓ das Wasser im Behälter 140 zusätzlich zum Kesselwasser 23 von der Speisewassertemperatur von z.B. 150° C auf z.B. 198° C aufgeheizt und damit die Speicherphase verlängert wird.

In Fig. 7 ist eine einfachere Form eines Energiespeichers dargestellt. Hier ist die Dampfleitung 25 des Kessels 2 über ein Rückschlagventil 181 an mehrere Verteilerdüsen 182 im unteren Bereich des Wasserbehälters 180 angeschlossen. Im oberen Bereich mündet eine in den Kessel 2 führende Ueberlaufleitung 183 Die Hauptleitung 164 aus Dampfnetz ist oberhalb der Ueberlaufleitung 183 an den Behälter 180 angeschlossen. Zusätzlich kann eine Speisewasserzuleitung 186 über einen Niveauregler 185 an den Behälter 180 angeschlossen sein. Diese Ausführungsform benötigt keine Umwälzpumpe. Die Wassertemperatur im Behälter 180 folgt der Wassertemperatur im Kessel 2.

Falls die anfallende Abluftmenge nur geringfügig variiert, kann die Regeleinrichtung 65 entsprechend vereinfacht werden. Das Gebläse 40 kann dann mit konstanter Drehzahl laufen und seine Durchsatzleistung z.B. mittels einer Drosselklappe 160 manuell so eingestellt werden, dass über den Kamin 13 wenig Frischluft angesaugt wird. Der Regler 71 entfällt in diesem Falle.

In Fig. 6 ist für diesen Fall eine vereinfachte, mechanische Ausführung des Reglers 67 dargestellt, der wiederum die in Fig. 4 gezeigte Kennlinie 103 hat. Der Kesseldruck p wirkt über eine Membrane 161 auf das Ventilglied 162 des Brennstoff-Regelventils 36. Eine Feder 163 drückt das Ventilglied 162 gegen eine Anschlagschraube 164, mit welcher die maximale Ventilöffnung so eingestellt wird, dass bei der gegebenen Abluft-Durchsatzmenge zum Brenner 34 die Temperatur in der ersten Wendekammer den zulässigen Wert von z.B. 1250° C nicht übersteigt. Die mittels einer Mutter 165 eingestellte Vorspannung der Feder 163 bestimmt den Beginn p₁ des Proportionalbereichs 102. Am Ende p₂ dieses Bereichs schlägt eine Nase 166 des Ventilgliedes 162 gegen einen Schwenkhebel 167, der durch eine Feder 168 in die dargestellte Grundstellung gegen eine Anschlagschraube 169 vorbelastet ist. Mit der Schraube 169 wird die Minimalöffnung des Ventils 36 während der Speicherphase so eingestellt, dass die Brennkammertemperatur z.B. 650° C nicht unterschreitet. Mit einer Einstellschraube 170 wird die Vorspannung der Feder 168 und damit der Maximaldruck pₘₐₓ eingestellt, bei welchem das Ventil 36 abschaltet. Ein Kniehebelmechanismus mit einer vorgespannten Feder 171 sorgt für eine sofortige Schliessung des Ventils 36 beim Erreichen von pₘₐₓ sowie für die Hysterese pₘₐₓ - p₃. Beim Umschalten des Hebels 167 wird über einen Grenzschalter 172 auch das Gebläse 40 mit etwas Verzögerung abgeschaltet.

## Patentansprüche

1. Anlage zur Reinigung der Abluft einer Abluftquelle (1), umfassend:
a) einen Dampfkessel (2) mit einem Flammrohr (21) und Konvektionsheizflächen (22), die von Wasser (23) umgeben sind;
b) eine innen thermisch isolierte, an das Flammrohr (21) angeschlossene Brennkammer (30), deren Innenisolation (33) sich über mindestens einen Teil des Flammrohres (21) erstreckt;
c) einen in die Brennkammer (30) mündenden Konus- oder Flächen-Brenner (34) zum Betrieb mit hohem Luftüberschuss;
d) ein mit dem Brenner (34) verbundenes, durch eine Regeleinrichtung (65) gesteuertes Brennstoff-Regelventil (36);
e) ein Verbrennungsluftgebläse (40), das druckseitig mit der Brennkammer (30) und saugseitig über eine Leitung (10) mit der Abluftquelle (1) verbunden ist;
f) einen an die Konvektionsheizflächen (22) des Dampfkessels (2) angeschlossenen Rauchgaskanal (45); und
g) einen im Rauchgaskanal (45) eingebauten Gas-Wasser-Wärmetauscher (47,48), der mit dem Dampfkessel (2) wasserseitig verbunden ist.

2. Anlage nach Anspruch 1, wobei der Dampfkessel (2) einen ersten Fühler (66) für eine Zustandsgrösse (p) des im Dampfkessel (2) enthaltenen Dampfes aufweist, und wobei die Regeleinrichtung (65) einen ersten Regler (67) aufweist, der eingangsseitig mit dem ersten Fühler (66) und ausgangsseitig mit dem Brennstoff-Regelventil (36) verbunden und so ausgebildet ist, dass in einem Teil-Lastbereich des Dampfkessels (2) die Brennstoffmenge abhängig von der Dampflast des Dampfkessels (2) und unabhängig von der zugeführten Abluftmenge geregelt ist.

3. Anlage nach Anspruch 2, wobei die Regeleinrichtung (65) einen zweiten Regler (71) enthält, der zumindest in einem Teil-Lastbereich des Dampfkessels (2) die Durchsatzleistung des Gebläses (40) entsprechend der mit einem weiteren Fühler (69,70) gemessenen anfallenden Abluftmenge regelt.

4. Anlage nach Anspruch 2 oder 3, wobei der erste Regler (67) eine Kennlinie (103) hat, bei der in einem ersten Bereich (p₁ bis p₂) der Zustandsgrösse (p) der Schliesshub (s) des Regelventils (36) analog zur Aenderung der Zustandsgrösse (p) ist, und bei der in einem zweiten Bereich (p₂ bis pₘₐₓ) der Zustandsgrösse (p) der Schliesshub (s) unabhängig von der zustandsgrösse (p) ist, wobei der zweite Bereich breiter ist als der erste Bereich.

5. Anlage nach Anspruch 4, wobei im zweiten Bereich der Schliesshub des Regelventils (36) durch die Rauchgastemperatur im Flammrohr (21) derart gesteuert ist, dass eine vorgegebene Mindesttemperatur (Tₘᵢₙ) nicht unterschritten wird.

6. Anlage nach einem der Ansprüche 1 bis 5, wobei der Wärmetauscher ein Rippenrohr-Wärmetauscher (47) ist, dessen wasserseitiger Eintrittsanschluss (50) über eine Pumpe (51) mit dem Wasserraum (23) des Dampfkessels (2) und dessen wasserseitiger Austrittsanschluss (52) über eine Druckmindereinrichtung (53) mit dem Wasser-Dampf-Kreislauf des Dampfkessels (2) verbunden ist.

7. Anlage nach Anspruch 6, wobei der Druckmindereinrichtung (53) eine Trenneinrichtung (54) zur Trennung von Wasser und Dampf nachgeschaltet ist und die Trenneinrichtung (54) über zwei separate Leitungen (55,56) für Wasser bzw. Dampf mit dem Wasser-Dampf-Kreislauf des Dampfkessels (2) verbunden ist.

8. Anlage nach einem der Ansprüche 1 bis 7, wobei stromaufwärts des Brenners (34) ein zweiter Konus- oder Flächenbrenner (34′) angeordnet ist.

9. Anlage nach einem der Ansprüche 1 bis 8, wobei die Abluftquelle (1) zwei Absaugventilatoren (8,9) aufweist, welche die Abluft mit unterschiedlicher Schadstoffkonzentration in die gemeinsame Leitung (10) zum Gebläse (40) fördern, und wobei in der Leitung (10) eine Klappe (74) und in der Regeleinrichtung (65) ein Grenzschaltglied (72) vorhanden sind, welches mittels der Klappe (74) den Ventilator (8), welcher die geringere Schadstoffkonzentration fördert, von der Leitung (10) trennt, wenn im Dampfkessel (2) ein vorgegebener Grenzwert (Tₘᵢₙ) unterschritten bzw. überschritten wird.

10. Anlage nach einem der Ansprüche 1 bis 9, wobei an den Wasser-Dampf-Kreislauf des Dampfkessels (2) ein zusätzlicher Wasserbehälter (140,180) als Energiespeicher angeschlossen ist.

## Claims

1. A system for purifying the exhaust air of an exhaust air source (1), comprising:
(a) a steam boiler (2) equipped with a fire tube (21) and convection heating surfaces (22) surrounded by water (23);
(b) an internally thermally insulated combustion chamber (30) connected to the fire tube (21), with the interior insulation (33) of the combustion chamber extending over at least part of the fire tube (21);
(c) a cone or surface burner (34) opening into the combustion chamber (30) for operation with a large amount of excess air;
(d) a fuel regulating valve (36) connected with the burner (34) and controlled by a control device (65);
(e) a combustion air blower (40) which, at the pressure side, is connected with the combustion chamber (30) and, at the suction side, is connected by way of a conduit (10) with the exhaust air source (1);
(f) a flue gas channel (45) connected to the convection heating surfaces (22) of the steam boiler (2); and
(g) a gas-water heat exchanger (47, 48) installed in the flue gas channel (45) and connected on the water side with the steam boiler (2).

2. A system according to claim 1, wherein the steam boiler (2) includes a first sensor (66) for a state variable (p) of the steam contained in the steam boiler (2), and wherein the control device (65) includes a first controller (67) whose input is connected with the first sensor (66) and whose output is connected with the fuel control valve (36) and is configured in such a way that the fuel quantity is regulated over a partial load range of the steam boiler (2) as a function of the steam load of the steam boiler (2) and independently of the quantity of exhaust air supplied.

3. A system according to claim 2, wherein the control device (65) includes a second controller (71) which regulates, at least over a partial load range of the steam boiler (2), the throughput power of the blower (40) corresponding to the quantity of incoming exhaust air measured by a further sensor (69, 70).

4. A system according to claim 2 or 3, wherein the first controller (67) has a characteristic (103) in which, in a first range (p₁ to p₂) of the state variable (p), the closing movement (s) of the control valve (36) is analogous to the change in the state variable (p) and wherein, in a second range (p₂ to pₘₐₓ) of the state variable (p), the closing movement (s) is independent of the state variable (p), with the second range being broader than the first range.

5. A system according to claim 4, wherein, in the second range, the closing movement of the control valve (36) is controlled by the flue gas temperature in the fire tube (21) in such a manner that a predetermined minimum temperature (Tₘᵢₙ) is always maintained.

6. A system according to one of claims 1 to 5, wherein the heat exchanger is a finned tube heat exchanger (47) whose water side inlet port (50) is connected by way of a pump (51) with the water chamber (23) of the steam boiler (2) and whose water side outlet port (52) is connected by way of a pressure reducing device (53) with the water-steam circuit of the steam boiler (2).

7. A system according to claim 6, wherein the pressure reducing device (53) is followed by a separating device (54) for separating water and steam and the separating device (54) is connected by way of two separate conduits (55, 56) for water and steam, respectively, with the water-steam circuit of the steam boiler (2).

8. A system according to one of claims 1 to 7, wherein a second cone or surface burner (34') is disposed upstream of the burner (34).

9. A system according to one of claims 1 to 8, wherein the exhaust air source (1) includes two extraction fans (8, 9) which convey exhaust air containing different contaminant concentrations into the common conduit (10) to the blower (40), and wherein a flap (74) is provided in the conduit (10) and a limit switch member (72) is provided in the control device (65), with said limit switch member separating the fan (8) that conveys the lower contaminant concentration from the conduit (10) by means of the flap (74), whenever a predetermined limit value (Tₘᵢₙ) is not reached or is exceeded in the steam boiler (2).

10. A system according to one of claims 1 to 9, wherein an additional water container (140, 180) is connected as energy store to the water-steam circuit of the steam boiler (2).

## Revendications

1. Installation de nettoyage de l'air d'évacuation d'une source d'air d'évacuation (1), comprenant :
a) un générateur de vapeur (2) avec un tube foyer (21) et des surfaces de chauffe à convection (22) entourées d'eau (23);
b) Une chambre de combustion (30) compoundée thermiquement, raccordée au tube foyer (21), dont l'isolation intérieure (33) s'étend au moins sur une partie du tube foyer (21);
c) un brûleur conique ou de surface (34), débouchant dans la chambre de combustion (30), pour l'activité de hauts excès d'air;
d) une vanne de régulation de combustible (36), commandée par un système régulateur (65), connectée au brûleur (34);
e) un ventilateur d'air de combustion (40) connecté à la chambre de combustion (30) du côté de refoulement et, par une conduite (10), à la source d'air d'évacuation (1) du côté d'aspiration;
f) un canal de gaz de combustion (45) raccordé aux surfaces de chauffe à convection (22) du générateur de vapeur (2); et
g) un échangeur de chaleur, eau et gaz (47, 48), incorporé au canal de gaz de combustion (45), connecté au générateur de vapeur (2) du côté de l'eau.

2. Installation selon revendication 1, en quoi le générateur de vapeur (2) présente un premier capteur (66) de variable d'état de la vapeur (p) contenu dans le générateur de vapeur (2), et en quoi le système régulateur (65) présente un premier régulateur (67) connecté au premier capteur (66) du côté de l'entrée et connecté à la vanne de régulation de combustible (36) du côté de sortie, et est ainsi formé que, dans une zone de charge partielle du générateur de vapeur (2), le manque en combustible est réglé dépendamment de la charge de vapeur du générateur de vapeur (2) et indépendamment du manque en air d'évacuation introduit.

3. Installation selon revendication 2, en quoi le système régulateur (65) comprend un deuxième régulateur (71) qui, dans au moins une zone de charge partielle du générateur de vapeur (2), règle la puissance de débit du ventilateur (40) correspondant au manque en air d'évacuation résultant mesuré par un autre capteur (69,70).

4. Installation selon revendication 2 ou 3, en quoi le premier régulateur (67) a une caractéristique (103) qui est, dans une première zone (p₁ à p₂) de variable d'état (p) d'élévation de fermeture (s) de la vanne de régulation (36), analogue au changement de variable d'état (p), et est, dans une deuxième zone (p₂ à pₘₐₓ) de variable d'état (p) d'élévation de fermeture (s), indépendante de la variable d'état (p), bien que la deuxième zone soit plus large que la première zone.

5. Installation selon revendication 4, en quoi dans la deuxième zone, l'élévation de fermeture de la vanne de régulation (36) est commandée par la température du gaz de combustion dans le tube foyer (21) de telle manière qu'une température minimale donnée (Tₘᵢₙ) est atteinte.

6. Installation selon une des revendications 1 à 5, en quoi l'échangeur de chaleur est un échangeur de chaleur en tube à ailettes (47) dont le raccord d'entrée du côté de l'eau (50) est connecté par une pompe (51) au réservoir d'eau (23) du générateur de vapeur (2) et dont le raccord de sortie du côté de l'eau (52) est connecté, par un dispositif réducteur (53), au mouvement circulaire de la vapeur et de l'eau du générateur de vapeur (2).

7. Installation selon revendication 6, en quoi le dispositif réducteur (53) est intercalé à la suite d'un dispositif de séparation (54) pour séparer l'eau de la vapeur et le dispositif de séparation (54) est connecté, par deux conduites séparées (55,56) respectivement pour l'eau et la vapeur, au mouvement circulaire de la vapeur et de l'eau du générateur de vapeur (2).

8. Installation selon une des revendications 1 à 7, en quoi un deuxième brûleur conique ou de surface (34') est placé en amont du brûleur (34).

9. Installation selon une des revendications 1 à 8, en quoi la source d'air d'évacuation (1) présente deux ventilateurs d'aspiration (8,9) qui refoulent l'air d'évacuation vers le ventilateur (40) avec une différente concentration de substance nocive dans la conduite commune (10) et en quoi, dans la conduite (10) se trouve un clapet (74) et dans le système régulateur (65) se trouve un élément interrupteur de fin de course (72), lequel, au moyen du clapet (74), sépare le ventilateur (8), qui refoule la moindre concentration de substance nocive, de la conduite, quand, dans le générateur de vapeur (2), une valeur limite donnée (Tₘᵢₙ) n'est respectivement pas atteinte ou est dépassée.

10. Installation selon une des revendications 1 à 9, en quoi un réservoir d'eau supplémentaire (140,180) est raccordé au mouvement circulaire de la vapeur et de l'eau du générateur de vapeur (2) comme réservoir d'énergie.
